(19)

Europäisches Patentamt
European Patent Office
Office européen des brevets

(11) **EP 1 926 164 A1**

(12) **EUROPEAN PATENT APPLICATION**

(43) Date of publication:
  **28.05.2008 Bulletin 2008/22**

(51) Int Cl.:
  *H01M 6/18* *(2006.01)*     *H01M 10/36* *(2006.01)*

(21) Application number: **07119263.7**

(22) Date of filing: **25.10.2007**

(84) Designated Contracting States:
  **AT BE BG CH CY CZ DE DK EE ES FI FR GB GR HU IE IS IT LI LT LU LV MC MT NL PL PT RO SE SI SK TR**
  Designated Extension States:
  **AL BA HR MK RS**

(30) Priority: **31.10.2006 JP 2006295487**

(71) Applicant: **Ohara Inc.**
  **Kanagawa, Kanagawa-ken (JP)**

(72) Inventor: **Indai, Yasushi**
  **Kanagawa Kanagawa (JP)**

(74) Representative: **Jönsson, Hans-Peter**
  **Von Kreisler Selting Werner,**
  **Deichmannhaus am Dom,**
  **Bahnhofsvorplatz 1**
  **50667 Cologne (DE)**

(54) **Lithium ion conductive solid electrolyte and a method for manufacturing the same**

(57) A lithium ion conductive solid electrolyte includes an ion conductive inorganic solid and, in a part or all of the pores of the inorganic solid, a material of a composition which is different from the composition of the inorganic solid exists. A method for manufacturing this lithium ion conductive solid electrolyte includes a step of forming an ion conductive inorganic solid to a predetermined form and a step of thereafter filling a material of a composition which is different from the composition of the inorganic solid in pores of the inorganic solid.

EP 1 926 164 A1

**Description**

This invention relates to a lithium ion conductive solid electrolyte useful mainly as an electrochemical element and a method for manufacturing the same. The invention relates also to an electrochemical element comprising this solid electrolyte.

An inorganic solid electrolyte which is a safe material and imposes little burden to an environment has been taken up for study for its application to various electrochemical elements. In the field of energy, particularly, application of an inorganic solid electrolyte to electrolytes of a lithium primary battery and a lithium secondary battery requiring a high capacity is expected and various studies and developments have been made in this field.

In the case of a lithium primary battery consisting of a lithium metal electrode and an air electrode, there is a risk that water generated in the air electrode and has passed through a solid electrolyte constituting a separator and reached the lithium electrode causes combustion and, therefore, a dense solid electrolyte which water hardly permeates is required. However, there has been no lithium ion conductive solid electrolyte that is sufficiently impermeable to water.

In an effort for obtaining a solid electrolyte having sufficient impermeability to water, the inventors of the present invention have attempted to form powder comprising inorganic powder as a main component to a predetermined shape, press the formed powder to increase its density and then sinter the formed powder. As a result, a fairly dense sintered compacts have been obtained but these sintered compacts sometimes have pores of several % to 10 % and, in this case, a perfectly dense sintered compact cannot be obtained.

In the field of a lithium secondary battery, an attempt has been made for utilizing a sintered compact of a lithium ion conductive inorganic solid as a solid electrolyte. In this case also, pores existing in the solid electrolyte impede sufficient interfacial contact between the electrodes and the solid electrolyte resulting in increase in resistance to moving of lithium ion which causes difficulty in achieving a battery of a high capacity. Further, air in the pores of the solid electrolyte is expanded and contracted due to change in temperature and thereby generates stress which causes cracking and break of the solid electrolyte. Therefore, existing of pores impedes achievement of a battery which can be used safely in an environment in which temperature changes over a wide range.

Japanese Patent Application Laid-open Publication No. 2004-127613 discloses a structure of a battery with an improved interfacial contact between different layers but it requires a patterning process for manufacturing this battery which requires a tremendous cost of manufacture.

It is, therefore, an object of the invention to provide a solid electrolyte which has low water permeability in a lithium primary battery and therefore is safe when it is used for a lithium metal - air electrode battery.

It is another object of the invention to provide a solid electrolyte which has a sufficient area of contact in an interface with an electrode of a lithium secondary battery and therefore is safe when it is used in an environment in which temperature changes over a wide range.

It is another object of the invention to provide a method for manufacturing the above described solid electrolyte.

It is another object of the invention to provide a lithium primary battery and a lithium secondary battery using the above described solid electrolyte.

The inventors of the present invention have found that a solid electrolyte which is very close, has little moisture permeability and high strength can be obtained by causing a material of a composition which is different from the composition of an ion conductive inorganic solid to be present in a part or all of pores of the inorganic solid.

A battery obtained by providing positive and negative electrodes on both sides of such solid electrolyte has a higher output and a higher capacity than a battery using a conventional solid electrolyte and its charge-discharge cycle characteristics are significantly improved compared with the battery using a conventional solid electrolyte. When the solid electrolyte of the present invention is used in a battery using lithium metal as an electrode, water may be generated in the opposite electrode during reaction of the battery, but water of the opposite electrode can hardly reach the lithium metal electrode and a safe battery thereby can be obtained.

Various aspects of the invention will be described below.

Aspect 1

A lithium ion conductive solid electrolyte having pores in an ion conductive inorganic solid characterized by presence, in a part or all of the pores of the inorganic solid, of a material of a composition which is different from the composition of the inorganic solid.

Aspect 2

A lithium ion conductive solid electrolyte as defined in aspect 1 wherein the material of the different composition exists in the ratio of 20 vol% or below of the ion conductive inorganic solid.

Aspect 3

A lithium ion conductive solid electrolyte as defined in aspect 1 or 2 wherein the material of the different composition comprises an inorganic solid.

Aspect 4

A lithium ion conductive solid electrolyte as defined in aspect 3 wherein the material of the different composition is at least one inorganic solid selected from the group consisting of glass, ceramics and glass-ceramics.

Aspect 5

A lithium ion conductive solid electrolyte as defined in any of aspects 1 - 4 wherein the material of the different composition comprises an organic polymer.

Aspect 6

A lithium ion conductive solid electrolyte as defined in any of aspects 3 - 5 wherein the material of the different composition comprises at least one material selected from the group consisting of glass, ceramics, glass-ceramics and organic polymer.

Aspect 7

A lithium ion conductive solid electrolyte as defined in any of aspects 1 - 6 wherein the ion conductive inorganic solid exists in the ratio of 80 vol % or over of the lithium ion conductive solid electrolyte.

Aspect 8

A lithium ion conductive solid electrolyte as defined in any of aspects 1 - 6 wherein the ion conductive inorganic solid comprises ceramics.

Aspect 9

A lithium ion conductive solid electrolyte as defined in any of aspects 1 - 8 wherein the ion conductive inorganic solid comprises glass-ceramics.

Aspect 10

A lithium ion conductive solid electrolyte as defined in any of aspects 1 - 9 wherein the ion conductive inorganic solid comprises a lithium component, a silicon component, a phosphorus component and a titan component.

Aspect 11

A lithium ion conductive solid electrolyte as defined in any of aspects 1- 10 wherein the ion conductive inorganic solid is an oxide.

Aspect 12

A lithium ion conductive solid electrolyte as defined in any of aspects 1 - 11 wherein the ion conductive inorganic solid comprises crystalline of $Li_{1+x+y}(Al, Ga)_x(Ti, Ge)_{2-x}Si_yP_{3-y}O_{12}$ (where $0 \leqq x \leqq 1$, $0 \leqq y \leqq 1$).

Aspect 13

A lithium ion conductive solid electrolyte as defined in aspect 12 comprising 50 wt% or over of said crystalline.

Aspect 14

A lithium ion conductive solid electrolyte as defined in aspect 12 or 13 wherein the crystalline does not substantially have pores or crystal grain boundaries which impedes ion conduction.

Aspect 15

A lithium ion conductive solid electrolyte as defined in aspect 9 wherein the ratio of the glass-ceramics to the ion conductive inorganic solid is 80 wt% or over.

Aspect 16

A lithium ion conductive solid electrolyte as defined in any of aspects 1 - 15 wherein the ion conductive inorganic solid comprises, in mol %;

| | |
|---|---|
| $Li_2O$ | 12 - 18%, and |
| $Al_2O_3 + Ga_2O_3$ | 5 - 10% and |
| $TiO_2 + GeO_2$ | 35 - 45% and |
| $SiO_2$ | 1- 10% and |
| $P_2O_5$ | 30 - 40%. |

Aspect 17

A lithium ion conductive solid electrolyte as defined in any of aspects 1 - 16 having lithium ion conductivity of $1 \times 10^{-4}Scm^{-1}$ or over.

Aspect 18

A lithium ion conductive solid electrolyte as defined in any of aspects 1- 17 wherein water permeability is $100g/m^2 \cdot 24H(60°C \times 90\%RH)$ or below.

Aspect 19

A lithium ion conductive solid electrolyte as defined in any of aspects 1 - 18 wherein porosity is 7 vol% or below.

Aspect 20

A lithium ion conductive solid electrolyte obtained by forming an ion conductive inorganic solid to a predetermined form and thereafter filling a material of a composition which is different from the composition of the inorganic solid in pores of the inorganic solid.

Aspect 21

A lithium primary battery comprising a lithium ion conductive solid electrolyte as defined in any of aspects 1 - 20.

Aspect 22

A lithium secondary battery comprising a lithium ion conductive solid electrolyte as defined in any of aspects 1 - 20.

Aspect 23

A method for manufacturing a lithium ion conductive solid electrolyte comprising a step of forming an ion conductive inorganic solid to a predetermined form and a step of thereafter filling a material of a composition which is different from the composition of the inorganic solid in pores of the inorganic solid.

Aspect 24

A method as defined in aspect 23 wherein filling of the material of the different composition is made by coating or spraying of a slurry or solution of the material, or dipping in a slurry or solution of the material, and thereafter drying or sintering the material.

Aspect 25

A method as defined in aspect 23 wherein filling of the material of the different composition is made by forming, on the surface of the predetermined form of the inorganic solid which constitutes a main structure, a material which is different from the main structure by thermal spraying, deposition, plating, ion plating, sputtering, PVD, CVD or electrophoresis.

According to the invention, a lithium ion conductive solid electrolyte suitable for a lithium primary battery and a lithium secondary battery, which has a high battery capacity without using an electrolytic solution, also has excellent charging-discharging characteristics and can be used stably over a long period of time can be provided. According to the invention, a method for manufacturing this solid electrolyte can also be provided.

Further, according to the invention, a lithium ion conductive solid electrolyte which is dense and has very small water permeability can be easily provided and a safe lithium metal - air battery and a method for manufacturing the same easily can be provided.

According to the invention, for the purpose of using an electrolyte for a lithium secondary battery, there is provided a solid electrolyte which is dense and therefore has a sufficient area of contact in an interface with an electrode and which is so durable against change in temperature that it can be used safely in an environment in which temperature changes over a broad range.

According to the method for manufacturing the solid electrolyte of the present invention, solid electrolytes of various shapes can be produced efficiently.

The solid electrolyte of the present invention can have ion conductivity of $1 \times 10^{-4} Scm^{-1}$ or over. As viewed comprehensively, more preferably ion conductivity of $3 \times 10^{-4} Scm^{-1}$ or over and, most preferably $4 \times 10^{-4} Scm^{-1}$ or over can be obtained.

Water permeability of the solid electrolyte of the present invention can be $100 g/m^2 \cdot 24H(60°C \times 90\%RH)$ or below. As viewed comprehensively, more preferably moisture permeability can be $90 g/m^2 \cdot 24H(60°C \times 90\%RH)$ or below and, most preferably $80 g/m^2 \cdot 24H(60°C \times 90\%RH)$ or below.

Embodimens of the invention will now be described.

The lithium ion conductive solid electrolyte of the present invention has pores in an ion conductive inorganic solid and is characterized by presence of a material of a composition which is different from the composition of the inorganic solid in a part or all of the pores.

The method for manufacturing the lithium ion conductive solid electrolyte of the present invention is characterized by comprising a step of forming an ion conductive inorganic solid to a predetermined form and a step of thereafter filling a material of a composition which is different from the composition of the inorganic solid in pores of the inorganic solid.

By using a solid electrolyte, a safe lithium secondary battery which is hardly likely to cause leakage of liquid can be normally obtained. Likewise, in a lithium primary battery, by using a solid electrolyte, a battery which can be safely kept and used without a risk of leakage of liquid and combustion can be obtained.

A lithium conductive inorganic solid can be obtained by, for example, sintering inorganic powder. By causing a material of composition which is different from the composition of the inorganic solid to be present in pores of the inorganic solid, a dense solid electrolyte having low water permeability can be obtained.

In the present specification, "pores" include apertures existing on the surface portion of a material and closed holes and gaps existing in the interior portion of the material.

The term "water permeability" is generally defined by, when space on one side of a solid electrolyte is one in which dry air of 0% humidity is circulating and space on the other side of the solid electrolyte is one in which air of 100% humidity is circulating, an amount of moisture (including water vapor) which moves from the space of 100% humidity to the space of the dry air per unit time and unit volume of the space. The unit of the water permeability is $g/m^2 \cdot day$. Since, however, measurement according to this definition requires much labor and cost, in the present specification, an amount measured by a simplified method of measurement is adopted as water permeability.

In the present specification, measurement of water permeability is made in the following manner. First, 1000 mg of dried LiTFSI used as a moisture absorbent is put in a sample bottle of $20 cm^3$ made of glass and a lid made of a solid electrolyte in the form of a plate having area of $3.14 cm^2$ is put on the sample bottle. Then, the gap between the lid and the bottle is sealed with an epoxy type adhesive to complete a sample cell for evaluation. Then, this sample cell is weighed and put in a thermo-hygrostat having temperature of 60°C and humidity of 90% RH and held there for 24 hours. Then, the sample cell is weighed again. Difference in the weight of the sample cell between before and after the test is calculated and this difference is divided by the area of the solid electrolyte to provide water permeability. The unit of the water permeability is $g/m^2 \cdot 24H(60°C \times 90\%RH)$.

In the case of a lithium primary battery consisting of a lithium metal electrode and an air electrode in which lithium metal is used for one electrode and water is generated in the other electrode during the battery reaction, it is desirable that this water does not reach the lithium metal electrode. For obtaining a safe battery in which water on the other electrode is difficult to reach the lithium metal electrode, water permeability of a solid electrolyte should preferably 100 g/m$^2$ • 24H(60°C $\times$ 90%RH) or below, more preferably be 90 g/m$^2$ • 24H(60°C $\times$ 90%RH) or below and, most preferably be 80 g/m$^2$ • 24H(60°C $\times$ 90%RH) or below.

If there are pores in a solid electrolyte, an ion conduction path does not exist in these pores and, therefore, ion conductivity of the solid electrolyte as a whole is reduced. Since in the solid electrolyte of the present invention, pores are filled with a material of a different composition, the solid electrolyte becomes dense. Accordingly, by selecting a material which fills the pores, ion conductivity of the solid electrolyte as a whole can be increased. Even when the material of a different composition has not much ion conductivity, if dielectricity of this material is high, ion conductivity in an interface between the solid electrolyte and the material of the different composition or ion conductivity on the surface of the solid electrolyte is increased and, as a result, ion conductivity of the solid electrolyte as a whole is increased.

For causing a material of a composition which is different from the composition of the ion conductive inorganic solid to exist in pores of the inorganic solid, in other words, for filling these pores, a slurry or solution containing such material is coated over the surface of the inorganic solid and then the inorganic solid is dried or sintered. By adding or filling the material of the different composition in the pores of the inorganic solid, the sintered compact, particularly its surface, becomes dense whereby the surface state of the sintered compact is improved. By selecting a material to be added, other property such as strength, ion conductivity and heat conductivity of the inorganic solid can also be improved.

For causing a material of a composition which is different from the composition of the ion conductive inorganic solid to exist in pores of the inorganic solid, other known methods such, for example, as dipping and spraying may also be used. For closing pores existing in the more interior portion of the solid electrolyte, the solid electrolyte may be dipped in a slurry or solution containing the material of the different composition to perform vacuum impregnation.

For closing pores existing in the vicinity of the surface of the solid electrolyte, filling of the material of the different composition is made by forming, on the surface of a predetermined form of the inorganic solid which constitutes a main structure, a material which is different from the main structure by thermal spraying, deposition, plating, ion plating, sputtering, PVD, CVD or electrophoresis. According to sputtering, ion plating, deposition, PVD, CVD and electrophoresis, even small pores may be accurately closed.

If the ratio of a material of a different composition existing in pores of a solid electrolyte is excessively large, properties of an ion conductive inorganic solid are reduced and, as a result, properties such as ion conductivity of the solid electrolyte as a whole may be deteriorated. Therefore, the ratio of the material of the different composition should preferably be 20 vol% or below, more preferably 15 vol% or below and, most preferably be 10 vol% or below, of the ion conductive inorganic solid.

As a material of a different composition, inorganic or organic material having high water-resistance can be used. Particularly, when this material is mixed or combined with an inorganic oxide or other material such as alumina, silica and titanium oxide, a solid electrolyte having not only high water-resistance but also high heat resistance and strength can be obtained.

As preferable properties of a material of a different composition can be cited excellent chemical durability and water-resistance and a coefficient of thermal expansion which is the same as or lower than that of the ion conductive inorganic solid. A solid electrolyte obtained by filling pores of an ion conductive inorganic solid with inorganic oxides such as highly water resisting alumina, silica and titanium oxide can be used safely over a long period of time by virtue of the excellent water-resistance.

By filling pores with a material having a coefficient of thermal expansion which is about the same as the coefficient of thermal expansion of an ion conductive inorganic solid (about 10 ppm/K in the case of glass-ceramics), a solid electrolyte which can be used in an environment in which temperature changes over a broad range is obtained. Alumina has a coefficient of thermal expansion of about 8 ppm/K and titanium oxide has a coefficient of thermal expansion of about 10 - 12 ppm/K. By filling pores of an ion conductive inorganic solid which has a similar coefficient of thermal expansion with such material, joint between the inorganic solid and the material of the different composition becomes strong whereby a solid electrolyte which has high resistance to thermal shock and can be used in an environment in which temperature changes over a broad range can be produced.

Even a material such as silica which has a low coefficient of thermal expansion has a strong joint with an ion conductive inorganic solid by filling pores of the inorganic solid in an amorphous state of the material, and the solid electrolyte can thereby be used stably over a long period of time.

As a material of a different composition, an organic material such as an organic polymer which has excellent chemical durability can also be used. The organic material cannot be used over a broad temperature but it may be solved in a solvent or melted and easily impregnated in an ion conductive inorganic solid to close pores of the inorganic solid. As an organic material having a high durability, a resin containing fluorine and an engeneering plastic for general use can be used.

As a material of a different composition for filling in pores of a solid electrolyte, an inorganic solid is preferable because it can increase strength of a solid electrolyte and is hardly likely to reduce durability and heat resisting property of the ion conductive inorganic solid.

When a material of a different composition is a material containing glass, it improves adhesion with the ion conductive inorganic solid and a dense solid electrolyte can be obtained by sintering the inorganic solid after closing the pores. In this case, by sintering at a temperature exceeding a softening point of the glass contained in the material of the different composition, the glass is softened or melted and thereby becomes easy to enter the pores in the inorganic solid and, by adhering of the glass to the ion conductive inorganic solid, a solid electrolyte which is dense and has high strength can be obtained.

When a material of a different composition is a material containing ceramics, a solid electrolyte having high strength can be obtained. By sintering a sol-gel precursor or a metal polymer solution used for coating, fine particles of ceramics can be produced. Particularly, when such sol-gel precursor or a metal polymer solution is used as a slurry or solution for closing pores, such material becomes particles of ceramics by sintering and because of sintering of these particles to one another, a solid electrolyte of higher density and strength can be produced.

When a material of a different composition is a material containing glass-ceramics, a solid electrolyte having high strength and density can be obtained. Particularly, by filling amorphous glass in pores of an ion conductive inorganic solid and sintering the inorganic solid, the filled glass is crystallized to become glass-ceramics whereby a solid electrolyte having high strength and density can be produced.

Ion conductivity of the solid electrolyte of the present invention is obtained mainly by an ion conductive inorganic solid constituting the solid electrolyte and, therefore, the ratio of amount of the ion conductive inorganic solid to the solid electrolyte should preferably be large. The ratio of amount of the ion conductive inorganic solid to the solid electrolyte should preferably be 80 vol% or over, more preferably be 85 vol% or over and, most preferably be 90 vol% or over.

The ion conductive inorganic solid can be produced by forming a material to a predetermined form and sintering the predetermined form. The predetermined form can be made by pressing using a simple mold, injection forming or forming using a doctor knife. Alternatively, the predetermined form can be made by adding a binder to a material and blending the mixture and thereafter forming the predetermined form by extruding or injection molding by using a generally used apparatus. Solid electrolytes of various forms can be made simply, efficiently and in inexpensive manner by such methods.

As a material of a predetermined form, lithium ion conductive inorganic powder, i.e., powder of glass, crystalline (ceramics or glass-ceramics) having high ion conductivity and chemical durability or mixture of such powder can be used. Not only in the form of inorganic powder, but the material may be formed in the form of a slurry obtained by mixing the inorganic powder with an organic or inorganic binder or, if necessary, with a dispersant in a solvent. In this case, a predetermined form is formed from the slurry and then the form is dried to remove the solvent. The organic binder can be removed by subsequent sintering..

An organic binder used in this case can be a general binder which is commercially available as a forming additive for press molding, bar press, extruding molding and injection molding. More specifically, acrylic resin, ethyl cellulose, polyvinyl butyral, methacrylate resin, urethane resin, butyl methacrylate and vinyl type copolymers can be used as a binder. In addition to these binders, a dispersant which increases dispersion of particles and a surfactant which improves defoaming during the drying process may be added in a proper amount. Since an organic material can be removed by sintering, there is no problem in using such organic material for, e.g., adjusting viscosity of a slurry during forming.

An inorganic compound containing Li may be added in a material for a form of a predetermined shape. The inorganic compound containing Li functions as a sintering additive, i.e., a binder for binding glass-ceramics particles together.

Inorganic compounds containing Li includes $Li_3PO_4$, $LiPO_3$, LiI, LiN, $Li_2O$, $Li_2PO_2$ and LiF. Such inorganic compound including Li can be softened or melted by adjusting sintering temperature and atmosphere, when it is mixed with inorganic material or glass-ceramics containing lithium ion conductive crystalline and sintered. The inorganic material including softened or melted Li flows into a gap between particles of glass-ceramics and thereby joins the inorganic material or glass-ceramics containing the lithium ion conductive crystalline.

Other inorganic powder or organic material may be added without causing any problem if addition of such material does not impede lithium ion conductivity but enhances electron conductivity. By adding a small amount of insulating crystalline or glass having high dielectricity as an inorganic powder, dispersion property of lithium ion increases and lithium ion conductivity thereby is improved. For this purpose, $BaTiO_3$, $SrTiO_3$, $Nb_2O_5$ and $LaTiO_3$, for example, may be added.

Sintering may be made in an ordinary manner. For example, a method by pressing a formed material by CIP (cold isotropic pressure) or other system and then sintering the formed material or a method by pressing a formed material during sintering by hot press or HIP (hot isostatic pressing) may be used. According to such method pressing a formed material before or during sintering, a sintered compact which is denser than is available by simple sintering can be produced.

In the present invention, as an ion conductive inorganic solid in a solid electrolyte, an inorganic material containing lithium ion conductive glass, lithium ion conductive crystalline (ceramics or glass-ceramics) or mixture thereof may be preferably used. Even if an inorganic material is a material having lithium ion conductivity which is not very high (for example, $1 \times 10^{-7} Scm^{-1}$), it may be used if ion conductivity of this material increases to $1 \times 10^{-4} Scm^{-1}$ or over by closing remaining pores with other material after sintering. Since an ion conductive inorganic solid can acquire high lithium ion conductivity easily by containing lithium, silicon, phosphorus and titanium as main components, it is preferable for the ion conductive organic solid to contain these components as main components.

An ion conductive inorganic solid should preferably be an oxide from the standpoint of chemical durability.

Since an ion conductive inorganic solid can acquire high ion conductivity by containing a lithium ion conductive crystalline, it is preferable for the inorganic solid to contain 50 wt% or over lithium ion conductive crystalline. For acquiring higher ion conductivity, the amount of the ion conductive crystalline should preferably be 55 wt% or over and, most preferably be 60 wt% or over.

As lithium ion conductive crystalline, crystalline of perovskite structure such as LiN, LiSICON, $La_{0.55}Li_{0.35}TiO_3$, crystalline of NASICON structure such as $LiTi_2P_3O_{12}$ as well as glass-ceramics precipitating such crystalline may be used.

A preferable lithium ion conductive crystalline is $Li_{1+x+y}(Al, Ga)_x(Ti, Ge)_{2-x}Si_yP_{3-y}O_{12}$ where $0 \leq x \leq 1$, $0 \leq y \leq 1$, more preferably $0 \leq x \leq 0.4$, $0 \leq y \leq 0.6$ and, most preferably $0.1 \leq x \leq 0.3$, $0.1 \leq y \leq 0.4$.

The above described crystalline is advantageous in respect of ion conductivity when it does not have a crystal grain boundaries which impede ion conduction. Among such crystalline, glass-ceramics scarcely have pores and crystal grain boundaries which impede ion conduction and hence have high ion conductivity and moreover have excellent chemical durability and therefore are particularly preferable.

As a material other than glass-ceramics which scarcely has pores and crystal grain boundaries which impede ion conduction, a single crystal of the above described crystalline can be cited. The single crystal of such crystalline is difficult to manufacture and therefore is costly. Accordingly, in respect of easiness of manufacture and manufacturing cost, lithium ion conductive glass-ceramics are advantageous.

As the above described ion conductive glass-ceramics can be cited, for example, glass-ceramics containing $Li_{1+x+y}Al_xTi_{2-x}Si_yP_{3-y}O_{12}$ where $0 \leq x \leq 1$, $0 \leq y \leq 1$ as a predominant crystal phase which is obtained by heat treating glass of a $Li_2O$ - $Al_2O_3$ - $TiO_2$ - $SiO_2$ - $P_2O_5$ composition for crystallization. In the glass-ceramics, the ratio of x and y more preferably is $0 \leq x \leq 0.4$, $0 \leq y \leq 0.6$ and, most preferably is $0.1 \leq x \leq 0.3$, $0.1 \leq y \leq 0.4$.

In this specification, pores and crystal grain boundaries which impede ion conduction mean pores and crystal grain boundaries which reduce ion conductivity of the inorganic material as a whole including lithium ion conductive crystalline to one tenth of ion conductivity of the lithium ion conductive crystalline in the inorganic material.

In this specification, glass-ceramics mean a material which is obtained by causing a crystal phase to precipitate in a glass phase by heat treating glass and therefore which consists of an amorphous solid and crystalline. The glass-ceramics include also a material in which the entire glass phase has been shifted to a crystal phase, i.e., the amount of crystalline (degree of crystallization) is 100 mass %. In the case of glass-ceramics, even glass-ceramics which have been 100% crystallized scarcely have pores in the crystal phase. In contrast, ceramics and sintered compacts inevitably have pores and crystal grain boundaries produced in between crystal particles and crystalline in the process of manufacture and can be distinguished in this respect from glass-ceramics. Particularly in respect of ion conduction, ceramics have a significantly lower conductivity than the degree of conduction of crystal grains themselves due to presence of pores and crystal grain boundaries. In the case of glass-ceramics, decrease in ion conduction between crystals can be restrained by control of the crystallization process whereby the conductivity of the glass-ceramics can be maintained in about the same order as the degree of conduction between the crystal grains.

Since a high conductivity can be achieved by containing a large amount of glass-ceramics in an ion conductive inorganic solid, the ratio of lithium ion conductive glass-ceramics to the ion conductive inorganic solid should preferably be 80 wt% or over and, for achieving a higher degree of ion conduction, more preferably be 85 wt% or over and, most preferably be 90 wt% or over.

Mobility of lithium ion during charge-discharge of a lithium secondary battery and during charging of a lithium primary battery depends upon ion conductivity and lithium ion transport number of the electrolyte. Therefore, in manufacturing the ion conductive solid of the present invention, a material having high lithium ion conductivity and high lithium ion transport number should preferably be used. Accordingly, in a case of producing an ion conductive inorganic solid from ion conductive inorganic powder, ion conductivity of the lithium ion conductive powder should preferably be $1 \times 10^{-4} S \cdot cm^{-1}$ or over, more preferably be $5 \times 10^{-4} S \cdot cm^{-1}$ or over and, most preferably be $1 \times 10^{-3} S \cdot cm^{-1}$ or over.

If ion conductivity increases by pressing a form of inorganic powder and thereafter sintering and/or crystallizing the form or sintering and/or crystallizing a form of inorganic powder while pressing it, ion conductivity of the inorganic powder before sintering should preferably be $1 \times 10^{-7} S \cdot cm^{-1}$ or over. However, by pressing a form of inorganic powder and thereafter sintering and/or crystallizing the form or sintering and/or crystallizing a form of inorganic powder while pressing it,

A preferable example of a composition of the ion conductive inorganic solid will be described below by way of example. Powder of glass having this composition has lithium ion conductivity of $1 \times 10^{-10} S \cdot cm^{-1}$ or below, i.e., it hardly exhibits lithium ion conductivity. However, by pressing a form of the inorganic powder and thereafter sintering and/or crystallizing the form or sintering and/or crystallizing a form of inorganic powder while pressing it, ion conductivity increases to $1 \times 10^{-4}$ S • cm$^{-1}$ or over.

Glass-ceramics obtained by heat treating mother glass having the composition described below for crystallization contain, as a predominant crystal phase, $Li_{1+x+y}(Al, Ga)_x(Ti, Ge)_{2-x}Si_yP_{3-y}O_{12}$ where $0 \leqq x \leqq 1$, $0 \leqq y \leqq 1$.

Composition ratios expressed in mol% and results thereof of respective components of the ion conductive inorganic solid will now be described.

$Li_2O$ is a useful component for providing $Li^+$ ion carrier and thereby imparting lithium ion conductivity to the material. For achieving an excellent ion conductivity, the lower limit of the amount of this component should preferably be 12%, more preferably be 13% and, most preferably be 14%. If the amount of $Li_2O$ is excessively large, thermal stability of the glass is deteriorated and ion conductivity of the glass-ceramics is reduced. The upper limit of the amount of this component should preferably be 18%, more preferably be 17% and, most preferably be 16%.

$Al_2O_3$ is effective for improving thermal stability of the mother glass and also for providing $Al^{3+}$ ion as a solid solution in the above described crystal phase and thereby improving lithium ion conductivity. For achieving these effects easily, the lower limit of the amount of this component should preferably be 5%, more preferably be 5.5% and, most preferably be 6%. If, however, the amount of this component exceeds 10%, thermal stability of the glass is deteriorated rather than is improved and ion conductivity of the glass-ceramics is reduced. Therefore, the upper limit of the amount of this component should preferably be 10%, more preferably be 9.5% and, most preferably be 9%.

$TiO_2$ contributes to forming of the glass and constitutes the above described crystal phase and, therefore is a useful component for both the glass and the crystal phase. For vitrification and for causing the above crystal phase to precipitate as a predominant crystal phase and thereby achieving a high ion conductivity easily, the lower limit of the amount of this component should preferably be 35%, more preferably be 36% and, most preferably be 37%. If, however, the amount of $TiO_2$ is excessively large, thermal stability of the glass is deteriorated and ion conductivity of the glass-ceramics is reduced. Therefore, the upper limit of the amount of this component should preferably be 45%, more preferably be 43% and, most preferably be 42%.

$SiO_2$ is effective for improving thermal stability of the mother glass and also for providing $Si^{4+}$ ion as a solid solution in the above described crystal phase and thereby improving lithium ion conductivity. For achieving these effects sufficiently, the lower limit of the amount of this component should preferably be 1%, more preferably be 2% and, most preferably be 3%. If, however, the amount of this component exceeds 10%, ion conductivity of the glass-ceramics is reduced rather than is improved. Therefore, the upper limit of the amount of this component should preferably be 10%, more preferably be 8% and, most preferably be 7%.

$P_2O_5$ is a useful component as a glass former and also is a component which constitutes the above described crystal phase. If the amount of this component is less than 30%, difficulty arises in vitrification. Therefore, the lower limit of the amount of this component should preferably be 30%, more preferably be 32% and, most preferably be 33%. If the amount of this component exceeds 40%, difficulty arises in the precipitation of the above described crystal phase in the glass and it becomes difficult to obtain desired properties. Therefore, the upper limit of the amount of this component should preferably be 40%, more preferably be 39% and, most preferably be 38%.

In the case of the above described composition, a glass can be easily obtained by casting molten glass and glass-ceramics obtained by heat treating this glass having the above described crystal phase has a high lithium ion conductivity of $1 \times 10^{-3}$ S • cm$^{-1}$.

Aside from the above described components, in glass-ceramics having a crystal structure similar to the one described above, $Al_2O_3$ can be replaced by $Ga_2O_3$ partly or in whole and $TiO_2$ can be replaced by $GeO_2$ partly or in whole. In the manufacture of the glass-ceramics, other materials may be added in small amounts for lowering the melting point or improving stability of the glass within a range not to significantly deteriorate ion conductivity.

Alkali metal components such as $Na_2O$ and $K_2O$ other than $Li_2O$ component should preferably not be added. Existence of such alkali metals in the glass-ceramics impedes lithium ion conduction by a mixing effect of alkali ions and thereby reduces ion conductivity.

Addition of sulfur in the glass-ceramics composition improves lithium ion conductivity but deteriorates chemical durability and stability of the glass-ceramics. Therefore, addition of sulfur should preferably be avoided. Addition of Pb, As, Cd and Hg which are likely to impart adverse effects to the environment and human body should preferably be avoided.

The solid electrolyte of the present invention has low porosity and particularly low porosity in the vicinity of the surface and hence when this solid electrolyte is used for a battery using an air electrode, a safe range of water permeability can be achieved. Porosity of the solid electrolyte should be as low as possible and it should preferably be 7 vol% or below, and more preferably 5% or below, from the standpoints of ion conductivity and water permeability which permitted practically for a battery. The solid electrolyte of the present invention has porosity of 4 vol% or below. Porosity in the present specification means the ratio of pores per unit volume and is expressed by the following formula:

$$\text{Porosity (\%) = (true density} - \text{bulk density)/true density} \times 100$$

True density here means density of substance which can be measured by a known method such as Archimedes' method. Bulk density means density obtained by dividing weight of substance by apparent volume thereof which includes openings in the surface portion and pores in the interior portion of the substance. For measuring bulk density, weight and volume of a specimen processed to a shape which is easy for measurement (e.g., cube or column) are measured and weight/ volume is calculated.

A lithium ion primary battery or a lithium ion secondary battery can be provided by disposing a positive electrode material and a negative electrode material on both sides of the solid electrolyte of the present invention, disposing also known collectors and packaging the assembly in a known manner.

As the positive electrode material of a lithium primary battery, a transition metal compound which can store lithium or carbon material may be used. For example, at least one transition metal compound selected from the group consisting of manganese, cobalt, nickel, vanadium, niobium, molybdenum and titanium or graphite or carbon may be used.

As the negative electrode material of the lithium ion primary battery, metal lithium or lithium alloy such as lithium-aluminum alloy and lithium-indium alloy which can discharge lithium may be used.

The solid electrolyte of the present invention can be used suitably as an electrolyte of a lithium-air battery. For example, a lithium-air battery can be produced by forming a negative electrode by lithium metal, disposing the solid electrolyte of the present invention and forming a positive electrode by a carbon material.

As an active material used for a positive electrode of a lithium secondary battery of the present invention, a transition metal compound which can store and discharge lithium may be used. For example, at least one transition metal oxide selected from the group consisting of manganese, cobalt, nickel, vanadium, niobium, molybdenum and titanium may be used.

As an active material used for a negative electrode of this lithium ion secondary battery, lithium metal or lithium alloys such as lithium-aluminum alloy and lithium-indium alloy which can store and discharge lithium, transition metal oxides such as titanium and vanadium and carbon material such as graphite may preferably be used.

Addition in the positive and/or negative electrode of a material which is the same as the glass-ceramics contained in the solid electrolyte is preferable because ion conductivity is thereby imparted. If the same material is used for the electrolyte and the electrode, ion moving mechanism of the electrolyte is unified with ion moving mechanism of the electrode and, therefore, ion moving between the electrolyte and the electrode can be made smoothly whereby a battery of a higher output and a higher capacity can be provided.

Specific examples of the lithium ion conductive solid electrolyte of the present invention having, in pores of a lithium ion conductive inorganic solid, a material of a composition different from the composition of the inorganic solid as well as examples of a lithium ion primary battery and a lithium ion secondary battery using this solid electrolyte will be described below. It will be understood that the present invention is not limited by these examples but various modifications can be made without departing from the spirit and scope of the invention.

Example 1

$H_3PO_4$-, $Al(PO_3)_3$, $Li_2CO_3$, $SiO_2$ and $TiO_2$ were used as raw materials. These raw materials were weighed and mixed uniformly to make a composition of 35.0% $P_2O_5$, 7.5% $Al_2O_3$, 15.0% $Li_2O$, 38.0% $TiO_2$ and 4.5% $SiO_2$ expressed in mol% on oxide basis. The mixture was put in a platinum pot and was heated and melted in an electric furnace at 1500°C for four hours while the molten glass was stirred. Then, the molten glass was dropped into flowing water to produce flakes of glass. The glass was heated at 950°C for twelve hours for crystallization and the target glass-ceramics were obtained. By powder X-ray diffraction, it was confirmed that the predominant crystal phase precipitating was $Li_{1+x+y}Al_xTi_{2-x}Si_yP_{3-y}O_{12}$ where $0 \leq x \leq 0.4$, $0 \leq y \leq 0.6$. Flakes of the obtained glass-ceramics were crushed by a jet mill of a laboratory scale and classified by a rotating roller made of zirconia and, as a result, glass-ceramics powder having average particle diameter of 2 $\mu$m and maximum particle diameter of 10 $\mu$m were obtained. For measuring the particle diameter, a laser diffraction-dispersion type particle size distribution measuring device (LS100Q) made by Beckman Coulter Inc. was used. The average particle diameter and maximum particle diameter are expressed on volume basis. Ion conductivity of this powder was $1.3 \times 10^{-3} Scm^{-1}$. The powder thus obtained was filled in a cylindrical mold made of rubber having an inner diameter of 60mm and inner height of 50mm and the mold was sealed after evacuation. The sealed rubber mold was put in a wet CIP apparatus and the powder was made dense by pressing the powder at pressure of 2t for 15 minutes. The form of powder thus made dense was taken out of the rubber mold and was subjected to sintering in atmosphere at 1050°C to produce an ion conductive inorganic solid. The ion conductive inorganic solid thus obtained was sliced and each sliced piece was polished on both surfaces to a sheet having a diameter of 45mm and thickness of 0.3mm. Au electrodes were attached on both sides of this ion conductive inorganic solid by sputtering. As a result of AC two-terminal type complex impedance measurement, the inorganic solid had ion conductivity of $2.6 \times 10^{-4} Scm^{-1}$ and porosity of 7.0 vol%.

This ion conductive inorganic solid was set on a spin coating apparatus having an automatic dispenser and DCP-Al-03 (trademark), a dip coating agent ($Al_2O_3$ with concentration of 3%) made by Kabushiki Kaisha Kojundo Kagaku Kenkyusho, was spin coated on the inorganic solid to form a film thereon. After forming of the film, the inorganic solid was dried at 150°C and then forming of a film by spin coating was made again under the same condition. Film forming and drying processes were repeated five times and then the inorganic solid was subjected to sintering for two hours at 700°C to produce a solid electrolyte in which alumina was present in pores as a material of a different composition.

Au electrodes were attached on both sides of the solid electrolyte thus obtained by sputtering and, as a result of the AC two terminal type complex impedance measurement, the solid electrolyte had ion conductivity of $2.6 \times 10^{-4} Scm^{-1}$ and porosity of 5.6 vol%, exhibiting that the solid electrolyte was a dense solid electrolyte having smaller porosity than the ion conductive inorganic solid in which pores were not filled.

Example 2

The glass obtained by Example 1 and was in a state before the crystallization process was milled by a ball mill to obtain glass powder having average particle diameter of 1.5 $\mu$m and maximum particle diameter of 9 $\mu$m. The glass powder was dispersed and mixed with urethane resin and dispersant in water used as a solvent to prepare a slurry. This slurry was formed to a plate by using a doctor blade and the plate was dried to remove the solvent and a formed glass in the form of a plate was thus obtained. The formed glass was held on both surfaces with a pair of plates made of rigid polyethylene and, after evacuation and sealing, was pressed in a CIP apparatus at pressure of 2t for 10 minutes for making it dense. The formed glass was then subjected to a process of removing inorganic substance at 400°C in atmosphere and further to a process of crystallization at 700°C. The ion conductive inorganic solid was sintered at 1050°C. This inorganic solid had ion conductivity of $3.8 \times 10^{-4} Scm^{-1}$ and porosity of 6.0 vol%.

A solid electrolyte in which silica ($SiO_2$) was present as a material of a different composition in pores of the above described inorganic solid was produced. For producing this solid electrolyte, a spin coater similar to the spin coater used in Example 1 was used to form a film by spin coating, on the surface of the ion conductive inorganic solid, DCP-Si-05S (trademark), a silica type dip coating agent ($SiO_2$ with concentration of 5%) made by Kabushiki Kaisha Kojundo Kagaku Kenkyusho.

After forming of the film, the inorganic solid was dried at 150°C and then forming of a film by spin coating was made again under the same condition. Film forming and drying processes were repeated five times and then the inorganic solid was subjected to sintering for two hours at 600°C to produce a solid electrolyte in which silica was present in pores as a material of a different composition.

Au electrodes were attached on both sides of the solid electrolyte thus obtained by sputtering and, as a result of the AC two terminal type complex impedance measurement, the solid electrolyte had ion conductivity of $2.1 \times 10^{-4} Scm^{-1}$ and porosity of 3.6 vol%, exhibiting that the solid electrolyte was a dense solid electrolyte having smaller porosity than the ion conductive inorganic solid in which pores were not filled. By conducting coating with silica, ion conductivity was decreased compared with the solid electrolyte in which pores were not filled but porosity was significantly reduced exhibiting that a dense solid electrolyte was obtained.

Example 3

The glass-ceramics powder obtained by Example 1 having average particle diameter of 2 $\mu$m was dispersed and mixed with acrylic resin and dispersant in water used as a solvent to prepare a slurry. This slurry was formed to a sheet by using a doctor blade and the sheet was dried to remove the solvent and a formed glass-ceramics in the form of a sheet was thus obtained. Eight formed glass-ceramics sheets were superposed one upon another and were held on both end surfaces with a pair of plates made of rigid polyethylene and, after evacuation and sealing, was pressed in a CIP apparatus at pressure of 2t for 10 minutes for laminating the glass-ceramics sheets together. The formed glass-ceramics were put in an electric furnace and were subjected to a process of removing inorganic substance at 400°C in atmosphere.. Then, sintering was made at 1060°C to produce an ion conductive inorganic solid. This inorganic solid had ion conductivity of $3.4 \times 10^{-4} Scm^{-1}$ and porosity of 5.4 vol%.

A solid electrolyte in which silica ($SiO_2$) was present as a material of a different composition in pores of the above described inorganic solid was produced. For producing this solid electrolyte, a silica type inorganic coating agnet NHC A-2014 (trademark), a hard coating agent for protecting an electrode made by Nissan Kagaku Kogyou Kabushiki Kaisha, was put in a glass laboratory dish and a sliced ion conductive inorganic solid constituting a main structure was dipped in this coating agent. This glass laboratory dish was put in an oven having a vacuum pump and was held there at 60°C, 0.01 MPa for one hour to fill pores of the ion conductive inorganic solid with the coating agent. After drying, the laboratory dish was put in an electric furnace for conducting sintering at 400°C for two hours to produce a solid electrolyte having silica as a material of a different composition in pores of the sintered compact.

Au electrodes were attached on both sides of the solid electrolyte thus obtained by sputtering and, as a result of the AC two terminal type complex impedance measurement, the solid electrolyte had ion conductivity of $2.4 \times 10^{-4}Scm^{-1}$ and porosity of 4.1 vol%, exhibiting that the solid electrolyte was a dense solid electrolyte having smaller porosity than the ion conductive inorganic solid in which pores were not filled. By impregnating the gaps of the main structure with silica and also coating the surface with silica, ion conductivity was decreased compared with the solid electrolyte in which pores were not filled but porosity was significantly reduced exhibiting that a dense solid electrolyte was obtained.

Example 4

The glass-ceramics powder obtained by Example 1 having average particle diameter of 2 μm was dispersed and mixed with acrylic resin and dispersant in water used as a solvent to prepare a slurry. This slurry was formed to a sheet by using a doctor blade and the sheet was dried to remove the solvent and a formed glass-ceramics in the form of a sheet was thus obtained. The formed glass-ceramics sheet was held on both surfaces with a pair of plates made of Teflon (trademark) and, after evacuation and sealing, was pressed in a CIP apparatus at pressure of 2t for 10 minutes for making it dense. The formed glass-ceramics sheet was put in an electric furnace and was subjected to a process of removing organic substance. Then, sintering was made at 1065°C to produce an ion conductive inorganic solid having thickness of 200 μm. This inorganic solid had ion conductivity of $3.6 \times 10^{-4}Scm^{-1}$ and porosity of 5.3 vol%.

Silica type sealing glass was milled to fine powder having average particle diameter of 0.5 μm by a wet ball mill and acrylic resin was added to produce a slurry in which glass was dispersed. By using a doctor knife, this slurry was coated thinly on a PET film which had been subjected to a mold releasing process and then was dried to form a glass film having thickness of 5 μm. This glass film was transferred to the sintered inorganic solid. By holding the inorganic solid in an electric furnace at a temperature exceeding melting temperature of the sealing glass, the glass film was melted and thereby a solid electrolyte in which the sealing glass as a material of a different composition was filled in in pores of the ion conductive inorganic solid was obtained

After thinly polishing the solid electrolyte thus obtained on both surfaces, Au electrodes were attached by sputtering and, as a result of the AC two terminal type complex impedance measurement, the solid electrolyte had ion conductivity of $1.9 \times 10^{-4}Scm^{-1}$ and porosity of 3.1 vol%, exhibiting that the solid electrolyte was a dense solid electrolyte having smaller porosity than the ion conductive inorganic solid in which pores were not filled. By impregnating gaps and coating the surface of the ion conductive inorganic solid with the sealing glass, ion conductivity was decreased compared with the solid electrolyte in which pores were not filled but porosity was significantly reduced exhibiting that a dense solid electrolyte was obtained.

Example 5

$Li_2CO_3$, $La_2O_3$ and $TiO_2$ were used as raw materials. These raw materials were weighed to make a composition of 12% $Li_2O$, 19% $La_2O$ and 69 % $TiO_2$ expressed in mol% on oxide basis and mixed by a ball mill for 24 hours. Since $La_2O_3$ had absorbed moisture, it was weighed and used after drying it. The mixture was preliminarily sintered at 1000 °C for five hours and, after milling the mixture again by a ball mill, was sintered at 1250°C to produce ion conductive ceramics. By powder X-ray diffraction, the obtained ceramics were confirmed to be a $LaTO_3$ type perovskite oxide. The obtained ceramics were milled by using balls made of zirconia and a planetary ball mill to produce ceramics powder having average diameter of 5 μm. This ceramics powder was formed to a disk in a CIP and sintered at 1350°C to produce an ion conductive inorganic solid in the form of a disk. The ion conductive inorganic solid had ion conductivity of $4.4 \times 10^{-4}Scm^{-1}$ and porosity of 6.2 vol%.

The glass powder produced and used in Example 2 was put in a ball mill with balls made of zirconia and ethanol used as a solvent. The glass powder was milled in the wet ball mill to fine pieces having average particle diameter of 0.4 μm to obtain a slurry of fine powder.

The ion conductive inorganic solid of the perovskite oxide in the form of a disk prepared in the above process was set as a partition film of a separating funnel having an aspirator. The slurry of glass fine powder was poured over the partition film of the ion conductive inorganic solid and, by filtering the slurry under reduced pressure, the glass fine powder was filled in pores of the ion conductive inorganic solid until the pores were blocked to prevent flowing out of the liquid. This partition film was dried in a drier of 100°C and then was placed in an electric furnace and heated at 900°C to crystallize the filled glass whereby a solid electrolyte having the perovskite oxide as a main structure with its gaps and pores filled with the crystallized glass was obtained.

After polishing the solid electrolyte thus obtained on both surfaces, Au electrodes were attached by sputtering and, as a result of the AC two terminal type complex impedance measurement, the solid electrolyte had ion conductivity of $7.5 \times 10^{-4}Scm^{-1}$ and porosity of 2.9 vol%, exhibiting that the solid electrolyte was a dense solid electrolyte having smaller porosity than the ion conductive inorganic solid in which pores were not filled. Further, since the filled crystallized glass which was a material of a different composition had also a high ion conductivity, the solid electrolyte thus obtained had a higher ion conductivity than the ion conductive inorganic solid in which pores were not filled.

Example 6

The glass before crystallization obtained in Example 1 was milled by a ball mill to obtain glass powder having average particle diameter of 1 $\mu$m and maximum particle diameter of 6 $\mu$m.

The glass powder was put in a mold having an inner diameter of 40mm and was pressed by uniaxial pressing at pressure of 2t to form a pellet having thickness of 2mm. This pellet was put in a bag made of rubber and, after vaccum, was put in a CIP apparatus and pressed at 2t for making it dense. The form thus made dense was then sintered in atmosphere at 1060°C to produce a sintered electrolyte (i.e., an ion conductive inorganic solid).

This ion conductive inorganic solid was ground and polished on both surfaces to a diameter of 30mm and thickness of 0.3mm. This ion conductive inorganic solid had ion conductivity of $3.4 \times 10^{-4} Scm^{-1}$ and porosity of 4.8 vol%.

The ion conductive inorganic solid then was polished on both surfaces and a $SiO_2$ film having thickness of about 1 $\mu$m was formed by a plasma CVD apparatus. By polishing the both surfaces again and annealing at 700°C, a solid electrolyte having its pores in the vicinity of the surface portion filled with a material of a different composition was produced. This solid electrolyte had ion conductivity of $1.5 \times 10^{-4} Scm^{-1}$ and porosity of 4.6 vol%. It was not possible to fill pores in the interior portion by this method but still a solid electrolyte which was sufficiently dense in the surface portion was obtained.

Example 7

The glass-ceramics powder obtained by Example 1 having average particle diameter of 2 $\mu$m was dispersed and mixed with acrylic resin and dispersant in water used as a solvent to prepare a slurry. This slurry was formed to a plate by extruding and the plate was dried to remove the solvent and a formed glass-ceramics in the form of a plate was thus obtained. The formed glass-ceramics were made dense by a heater press and then was subjected to sintering at 1060°C to produce an ion conductive inorganic solid. This inorganic solid had ion conductivity of $2.8 \times 10^{-4} Scm^{-1}$ and porosity of 5.8 vol%.

Amorphous silica having average particle diameter of 0.1 $\mu$m was added to a solution made by solving PVdF (polyfluorovinylidene) in NMP (N-methyl-2-pyrrolidone) and dispersed and mixed. The ion conductive inorganic solid was impregnated with this solution and was held in an oven having a vacuum pump at 80°C, 0.01Mpa for two hours to fill gaps of the solid electrolyte which constituted the main structure with the solution of PVdF and amorphous silica. Then, the ion conductive inorganic solid was taken out of the solution and vacuum dried at 130°C to produce an inorganic solid in which the pores of the inorganic solid was filled with PVdF which is an organic polymer and inorganic amorphous silica as materials of a different composition from the composition of the inorganic solid. This inorganic solid had ion conductivity of $2.8 \times 1^{-4} Scm^{-1}$ and porosity of 4.6 vol%.

Measurement of water permeability

1000 mg of dried LiTFSI used as a moisture absorbent was put in a sample bottle of 20 cc made of glass and a lid made of each of a solid electrolyte in the form of a plate having area of 3.14 $cm^2$ obtained by Examples 1 to 7 was put on the sample bottle. Then, the gap between the lid and the bottle was sealed with an epoxy type adhesive to complete a sample cell for evaluation. Then, this sample cell was weighed and put in a thermo-hygrostat having temperature of 60°C and humidity of 90% RH and held there for 24 hours. Then, the sample cell was weighed again. Difference in the weight of the sample cell between before and after the test corresponds to amount of water absorbed and this difference was divided by the area of the solid electrolyte to provide water permeability. The unit of water permeability is g/m$^2$ • 24H(60°C $\times$ 90%RH). The obtained water permeability is shown in Table 1.

Comparative Examples

The solid electrolytes in which pores were not filled in Examples 1 to 7 were listed as Comparative Examples 1 to 7 and water permeability of the Comparative Examples was measured under the sane condition as in Examples 1 to 7. The obtained water permeability is shown in Table 1.

Table 1

| | water permeability | | water permeability | |
|---|---|---|---|---|
| | $(g/m^2 \cdot 24H(60°C \times 90\%RH))$ | | $(g/m^2 \cdot 24H(60°C \times 90\%RH))$ | |
| Com. Example 1 | 150 | Example 1 | 40 |
| Com. Example 2 | 162 | Example 2 | 27 |
| Com. Example 3 | 160 | Example 3 | 20 |
| Com. Example 4 | 125 | Example 4 | 17 |
| Com. Example 5 | 103 | Example 5 | 14 |
| Com. Example 6 | 102 | Example 6 | 35 |
| Com. Example 7 | 142 | Example 7 | 58 |

As described above, by filling a material of a composition which is different from a composition of an inorganic solid in pores of the inorganic solid, a solid electrolyte which is dense and has excellent ion conductivity was obtained.

This solid electrolyte can be suitably used as an electrolyte for a lithium primary battery and a lithium secondary battery and a battery using this solid electrolyte has a high capacity and can be used stably over a long period of time.

Example 9

The solid electrolyte obtained in Example 3 in which pores were filled with the material of a different composition was cut to a disk shape and was polished to a disk having an outer diameter of 16mm and thickness of 0.2mm. A lithium primary battery was assembled by using this solid electrolyte.

As an active material of a positive electrode, commercially available $MnO_2$ was used and this active material was mixed with acetylene black used as an electron conduction additive and PVdF used as a binder. The mixture was formed to thickness of 0.3mm by a roll press and was subjected to stamping to stamp out a disk having an outer diameter of 15mm and this disk was used as a positive material compound.

Al was attached to one side of the solid electrolyte and a Li-Al alloy negative electrode having an outer diameter of 15mm was bonded on Al to form a negative electrode. The positive electrode compound was bonded on the other side of the solid electrolyte. The cell made in this manner was put in a coin cell made of stainless steel and a mixed solvent of propylene carbonate added with 1 mol% of $LiClO_4$ as a Li salt and 1, 2 - dimethoxyethane was also put in the coin cell and the cell was sealed to produce a lithium primary battery. Discharging test was made at 25°C room temperature and, as a result, capacity of 20mAh or over and average operation voltage of 3V was obtained. Since the solid electrolyte was fixed in the coin cell and hence deflection caused by change in volume of the battery by discharging did not take place as in the prior art separator made of resin, a stable discharging potential was maintained to the last during use of the battery.

Example 10

The solid electrolyte obtained in Example 3 in which pores were filled with the material of a different composition was cut to a disk shape and was polished to a disk having an outer diameter of 16mm and thickness of 0.15mm. A lithium primary battery was assembled by using this solid electrolyte.

A slurry including $LiCoO_2$ as an active material and fine powder of lithium ion conductive glass-ceramics obtained by wet-milling the lithium ion conductive glass-ceramics obtained in Example 1 to fine powder having average particle diameter of 0.3 μm as ion conduction additive was coated on one side of the solid electrolyte and dried and sintered to form a positive electrode compound. A positive electrode collector was attached by sputtering A1 on the positive electrode compound and superposing an A1 foil thereon. On the other side of the solid electrolyte, a slurry including $Li_4Ti_5O_{12}$ (active material) and the same fine powder of glass-ceramics as that used for the positive electrode (ion conduction additive) was coated and sintered to form a negative electrode compound. Paste including fine powder of cupper was coated on the negative electrode compound and dried and sintered to form a negative electrode collector. The assembly was put in a coin cell to form a battery. It was confirmed that this battery could be charged at 3.5V and could be operated at average discharging voltage of 3V. By discharging this battery to 2.5V and then charging it at 3.5V, it was confirmed that this battery was a lithium secondary battery which could be operated again at average discharging voltage of 3V.

The electrolyte of the present invention comprising a lithium ion conductive inorganic solid in which a material of a different composition is present in pores of the inorganic solid has high lithium ion conductivity and is dense and electrochemically very stable and, therefore, it can be used not only for a lithium primary battery and a lithium secondary battery, but for an electrochemical capacitor called a hybrid capacitor, a dye sensitized solar cell, and other electrochemical elements using lithium ion as a charge transfer carrier. Some examples of such electrochemical elements will be described below.

By attaching a desired sensitive electrode to the electrolyte, the electrolyte can be used for various gas sensors and other detectors. For example, by using carbonate as an electrode, it can be used as a carbon dioxide gas sensor. By using nitrate as an electrode, it can be used as a $NO_x$ sensor. By using sulfate as an electrode, it can be used as a $SO_x$ sensor. By assembling the electrolyte in an electrolytic cell, it can be used as an electrolyte for decomposing and catching $NO_x$ and $SO_x$ in exhaust gas.

By attaching an inorganic or organic compound which is colored or changes its color by insertion or removal of lithium ion to the electrolyte, and attaching a transparent electrode such as ITO thereto, an electrochromic device can be composed whereby an electrochromic display of a small power consumption having a memory function can be provided.

Since the ion conduction path of the electrolyte of the present invention has an optimum size for passing lithium ion, it can pass lithium ion selectively when alkali ion other than lithium ion also exists. The electrolyte therefore can be used as a partition of a lithium ion selective collection device or a partition of a lithium ion selection electrode. Since the speed of passing of lithium ion is higher as the mass of the ion is smaller, the electrolyte can be used for separating isotope of lithium ion. This enables concentration and separation of 6Li concentrate (7.42% in the ratio existing in nature) which is necessary for a blanket material for producing tritium which is a fuel of a fusion reactor.

**Claims**

1. A lithium ion conductive solid electrolyte having pores in an ion conductive inorganic solid **characterized by** presence, in a part or all of the pores of the inorganic solid, of a material of a composition which is different from the composition of the inorganic solid.

2. A lithium ion conductive solid electrolyte as defined in claim 1 wherein the material of the different composition exists in the ratio of 20 vol% or below of the ion conductive inorganic solid.

3. A lithium ion conductive solid electrolyte as defined in claim 1 or 2 wherein the material of the different composition comprises an inorganic solid.

4. A lithium ion conductive solid electrolyte as defined in claim 3 wherein the material of the different composition is at least one inorganic solid selected from the group consisting of glass, ceramics and glass-ceramics.

5. A lithium ion conductive solid electrolyte as defined in any of claims 1 - 4 wherein the material of the different composition comprises an organic polymer.

6. A lithium ion conductive solid electrolyte as defined in any of claims 3 - 5 wherein the material of the different composition comprises at least one material selected from the group consisting of glass, ceramics, glass-ceramics and organic polymer.

7. A lithium ion conductive solid electrolyte as defined in any of claims 1 - 6 wherein the ion conductive inorganic solid exists in the ratio of 80 vol % or over of the lithium ion conductive solid electrolyte.

8. A lithium ion conductive solid electrolyte as defined in any of claims 1 - 6 wherein the ion conductive inorganic solid comprises ceramics.

9. A lithium ion conductive solid electrolyte as defined in any of claims 1-8 wherein the ion conductive inorganic solid comprises glass-ceramics.

10. A lithium ion conductive solid electrolyte as defined in any of claims 1- 9 wherein the ion conductive inorganic solid comprises a lithium component, a silicon component, a phosphorus component and a titan component.

11. A lithium ion conductive solid electrolyte as defined in any of claims 1 - 10 wherein the ion conductive inorganic solid is an oxide.

12. A lithium ion conductive solid electrolyte as defined in any of claims 1 - 11 wherein the ion conductive inorganic solid comprises crystalline of $Li_{1+x+y}Al, Ga)_x(Ti, Ge)_{2-x}Si_yP_{3-y}O_{12}$ (where $0 \leqq x \leqq 1$, $0 \leqq y \leqq 1$).

**13.** A lithium ion conductive solid electrolyte as defined in claim 12 comprising 50 wt% or over of said crystalline.

**14.** A lithium ion conductive solid electrolyte as defined in claim 12 or 13 wherein the crystalline does not substantially have pores or crystal grain boundaries which impedes ion conduction.

**15.** A lithium ion conductive solid electrolyte as defined in claim 9 wherein the ratio of the glass-ceramics to the ion conductive inorganic solid is 80 wt% or over.

**16.** A lithium ion conductive solid electrolyte as defined in any of claims 1 - 15 wherein the ion conductive inorganic solid comprises, in mol %;

| | |
|---|---|
| $Li_2O$ | 12 - 18%, and |
| $Al_2O_3 + Ga_2O_3$ | 5 - 10% and |
| $TiO_2 + GeO_2$ | 35 - 45% and |
| $SiO_2$ | 1-10% and |
| $P_2O_5$ | 30 - 40%. |

**17.** A lithium ion conductive solid electrolyte as defined in any of claims 1 - 16 having lithium ion conductivity of $1 \times 10^{-4} Scm^{-1}$ or over.

**18.** A lithium ion conductive solid electrolyte as defined in any of claims 1 - 17 wherein water permeability is 100g/m² • 24H(60°C × 90%RH) or below.

**19.** A lithium ion conductive solid electrolyte as defined in any of claims 1 - 18 wherein porosity is 7 vol% or below.

**20.** A lithium ion conductive solid electrolyte obtained by forming an ion conductive inorganic solid to a predetermined form and thereafter filling a material of a composition which is different from the composition of the inorganic solid in pores of the inorganic solid.

**21.** A lithium primary battery comprising a lithium ion conductive solid electrolyte as defined in any of claims 1- 20.

**22.** A lithium secondary battery comprising a lithium ion conductive solid electrolyte as defined in any of claims 1- 20.

**23.** A method for manufacturing a lithium ion conductive solid electrolyte comprising a step of forming an ion conductive inorganic solid to a predetermined form and a step of thereafter filling a material of a composition which is different from the composition of the inorganic solid in pores of the inorganic solid.

**24.** A method as defined in claim 23 wherein filling of the material of the different composition is made by coating or spraying of a slurry or solution of the material, or dipping in a slurry or solution of the material, and thereafter drying or sintering the material.

**25.** A method as defined in claim 23 wherein filling of the material of the different composition is made by forming, on the surface of the predetermined form of the inorganic solid which constitutes a main structure, a material which is different from the main structure by thermal spraying, deposition, plating, ion plating, sputtering, PVD, CVD or electrophoresis.

**European Patent Office**

**EUROPEAN SEARCH REPORT**

Application Number

EP 07 11 9263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/059794 A (OHARA KK [JP]; INDA YASUSHI [JP]) 8 June 2006 (2006-06-08)<br><br>* page 11, line 24 - page 12, line 1; claims 5,8; examples 1,3 *<br>----- | 1-4, 6-17, 20-22 | INV.<br>H01M6/18<br>H01M10/36 |
| P,X | EP 1 775 789 A (OHARA KK [JP]) 18 April 2007 (2007-04-18)<br><br>* paragraph [0100]; examples 1,10 *<br>----- | 1,3,4, 6-17, 19-21, 23,25 | |
| X | WO 2006/019064 A (OHARA KK [JP]; INDA YASUSHI [JP]) 23 February 2006 (2006-02-23) * page 21, line 17 - page 22, line 11; claims 1-27; examples 1-10 *<br>----- | 1 | |
| P,X | EP 1 760 819 A (OHARA KK [JP]) 7 March 2007 (2007-03-07)<br><br>* paragraphs [0069], [0078] - [0081]; claims 1-23 *<br>----- | 1,2, 5-17,20, 22-25 | TECHNICAL FIELDS SEARCHED (IPC)<br><br>H01M |
| X | EP 0 084 623 A (VARTA BATTERIE [DE]) 3 August 1983 (1983-08-03) * page 3, line 35 - page 4, line 1 * * page 7, lines 9-14 *<br>----- | 1,5,6,8, 20-25 | |
| X | LEO C J ET AL: "Effect of MgO addition on the ionic conductivity of LiGe2(PO4)3 ceramics" SOLID STATE IONICS, NORTH HOLLAND PUB. COMPANY. AMSTERDAM, NL, vol. 159, no. 3-4, April 2003 (2003-04), pages 357-367, XP004423460 ISSN: 0167-2738 * figure 2; table 2 *<br>----- | 1-4,6-8, 11-13, 15,17, 19,20 | |

-/--

The present search report has been drawn up for all claims

| Place of search | Date of completion of the search | Examiner |
|---|---|---|
| Munich | 5 February 2008 | Kiliaan, Sven |

EPO FORM 1503 03.82 (P04C01)

**European Patent**
**Office**

EUROPEAN SEARCH REPORT

Application Number

EP 07 11 9263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 834 137 A (ZHANG JI-GUANG [US] ET AL) 10 November 1998 (1998-11-10) * example 5 * ----- | 1,3,4,6, 8,11,20 | |
| | | | TECHNICAL FIELDS SEARCHED (IPC) |

The present search report has been drawn up for all claims

| Place of search | Date of completion of the search | Examiner |
|---|---|---|
| Munich | 5 February 2008 | Kiliaan, Sven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 11 9263

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2008

| Patent document cited in search report | | Publication date | Patent family member(s) | | Publication date |
|---|---|---|---|---|---|
| WO 2006059794 | A | 08-06-2006 | EP | 1815553 A2 | 08-08-2007 |
| | | | KR | 20070086256 A | 27-08-2007 |
| | | | US | 2007048619 A1 | 01-03-2007 |
| EP 1775789 | A | 18-04-2007 | JP | 2007134305 A | 31-05-2007 |
| | | | KR | 20070041358 A | 18-04-2007 |
| WO 2006019064 | A | 23-02-2006 | EP | 1794834 A2 | 13-06-2007 |
| | | | JP | 2006086102 A | 30-03-2006 |
| | | | KR | 20070028588 A | 12-03-2007 |
| EP 1760819 | A | 07-03-2007 | CN | 1925203 A | 07-03-2007 |
| | | | JP | 2007066703 A | 15-03-2007 |
| | | | KR | 20070026159 A | 08-03-2007 |
| | | | US | 2007048617 A1 | 01-03-2007 |
| EP 0084623 | A | 03-08-1983 | DE | 3201909 A1 | 04-08-1983 |
| | | | JP | 58128677 A | 01-08-1983 |
| | | | US | 4557985 A | 10-12-1985 |
| US 5834137 | A | 10-11-1998 | AU | 699634 B2 | 10-12-1998 |
| | | | AU | 7242396 A | 28-04-1997 |
| | | | CA | 2206817 A1 | 10-04-1997 |
| | | | EP | 0797788 A2 | 01-10-1997 |
| | | | JP | 2002504259 T | 05-02-2002 |
| | | | WO | 9713178 A1 | 10-04-1997 |
| | | | US | 5716736 A | 10-02-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004127613 A